# EUROPEAN PATENT APPLICATION

(11) **EP 1 967 774 A1**
(43) Date of publication of application: **10.09.2008**
(21) Application number: 07250902.9
(22) Date of filing: 05.03.2007
(51) Int. Cl.: F16J 15/34

(54) **Coaxial multi-shaft assemblies**

(71) Applicant: Chugai High Technology Co., Ltd., Taito-ku, Tokyo 110-0016 (JP); Nantong Zhongyuan Industrie Co., Ltd., 44 Ren Gang Road Nantong, Jiangsu Province 226006 (CN)
(72) Inventor: Sei, Chugen, Taito-ku Tokyo, 110-0016 (JP)
(74) Representative: Baldwin, Mark

(57) **Abstract**

A concentric multi-shaft assembly (1) comprises a casing (2), a hollow outer shaft (3) that is freely rotatable in the casing, an inner shaft (4) that is freely rotatable in the outer shaft (3) and independently of the outer shaft, an outer shaft seal arrangement (18,19,20,21) sealing between the casing and the outer shaft and an inner shaft seal arrangement (24,25,27,28) sealing between the outer shaft and the inner shaft. The outer shaft seal arrangement includes a spring seat (6) supported by the casing (2) such that it does not rotate when, in use, the outer shaft rotates. The inner shaft seal arrangement comprises a spring seat (8) that is supported by the inner shaft such that it is rotatable with the inner shaft. The spring seat (6) of the outer shaft seal arrangement is arranged to divide an outer seal chamber defined between the outer shaft and the casing into two parts (10,11), a first of the two parts being a feed chamber (10) arranged to receive coolant via a feed inlet (12) and a second of the two parts being a discharge chamber (11) from which, in use, coolant is discharged from the assembly (1) via a discharge outlet (13). An inner seal chamber (14) is defined between the inner shaft and the outer shaft. A feed hole (15) and discharge hole (16) extend between the feed chamber (10) and the inner seal chamber and between the discharge chamber (11) and the inner seal chamber respectively. The arrangement is such that coolant from an external source can flow into the feed chamber (10) via the feed inlet (12), from the feed chamber into the inner seal chamber (14) via the feed hole (15), from the [feed] chamber into the discharge chamber (11) via the discharge hole (16) and from the discharge chamber via the discharge outlet (13).

## Description

Coaxial multi-shaft assemblies are not commonly used. Mechanical sealing of such assemblies is more complex than for single shaft assemblies. An object of the invention is to provide a coaxial multi-shaft assembly having a shaft sealing arrangement that is at least an alternative to previous proposals.

The invention provides a coaxial multi-shaft assembly comprising a casing, a hollow outer shaft that is freely rotatable in the casing, an inner shaft that is freely rotatable in the outer shaft and independently of the outer shaft, an outer shaft seal arrangement sealing between the casing and the outer shaft and an inner shaft seal arrangement sealing between the outer shaft and the inner shaft, the outer shaft seal arrangement including a spring seat supported by the casing such that it does not rotate when, in use, the outer shaft rotates, the inner shaft seal arrangement comprising a spring seat that is supported by the inner shaft such that it is rotatable with the inner shaft, the spring seat of the outer shaft seal arrangement being arranged to divide an outer seal chamber defined between the outer shaft and the casing into two parts, a first of the two parts being a feed chamber arranged to receive coolant via a feed inlet and a second of the two parts being a discharge chamber from which, in use, coolant is discharged from the assembly via a discharge outlet, an inner seal chamber being defined between the inner shaft and the outer shaft, a feed hole and discharge hole extending between the feed chamber and the inner seal chamber and between the discharge chamber and the inner seal chamber respectively and the arrangement being such that coolant from an external source can flow into the feed chamber via the feed inlet, from the feed chamber into the inner seal chamber via the feed hole, from the inner seal chamber into the discharge chamber via the discharge hole and from the discharge chamber via the discharge outlet.

The invention also includes a coaxial multi-shaft assembly comprising casing means, an outer shaft at least partially housed in the casing means and rotatable relative to the casing means, an inner shaft at least partially housed in the outer shaft and rotatable relative to the outer shaft, outer seal means for sealing between the casing means and the outer shaft and inner seal means for sealing between the outer shaft and the inner shaft, the assembly being provided with a coolant flowpath that includes outer seal housing means in which said outer seal means is at least partially housed and inner seal housing means in which said inner seal means is at least partially housed and the arrangement being such that, in use, coolant flowing along said flowpath cools said inner and outer seal means.

In order that the invention may be well understood, an embodiment thereof, which is given by way of example only, will now be described with reference to the drawings in which:
Figure 1 is a sectional view of a coaxial multi-shaft assembly;
Figure 2 is a section on line II-II in Figure 1;
Figure 3 is a section on line III-III in Figure 1; and
Figure 4 is a perspective view of a portion of the outer shaft of the multi-shaft assembly.

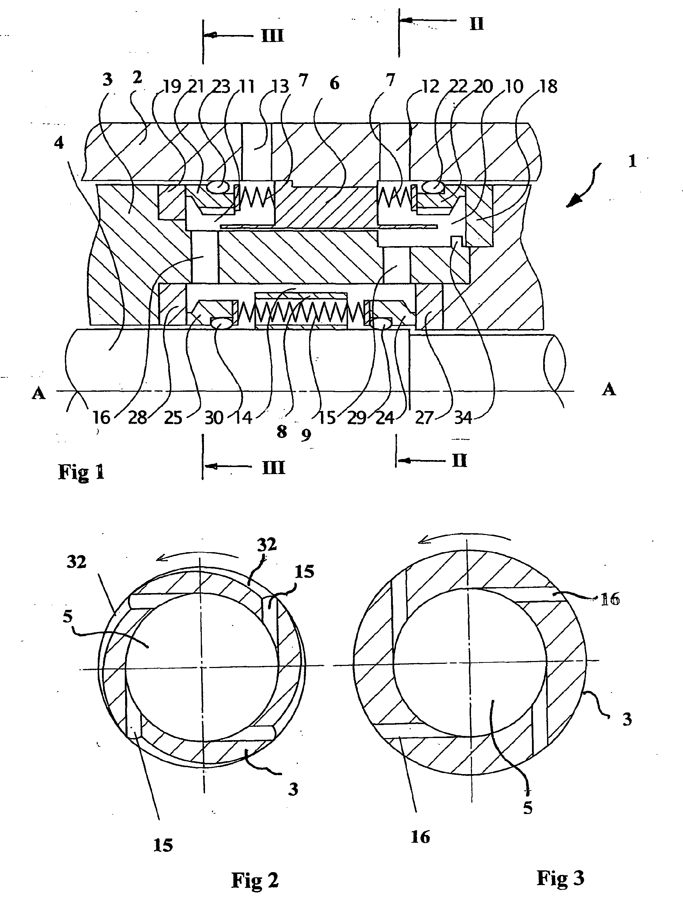

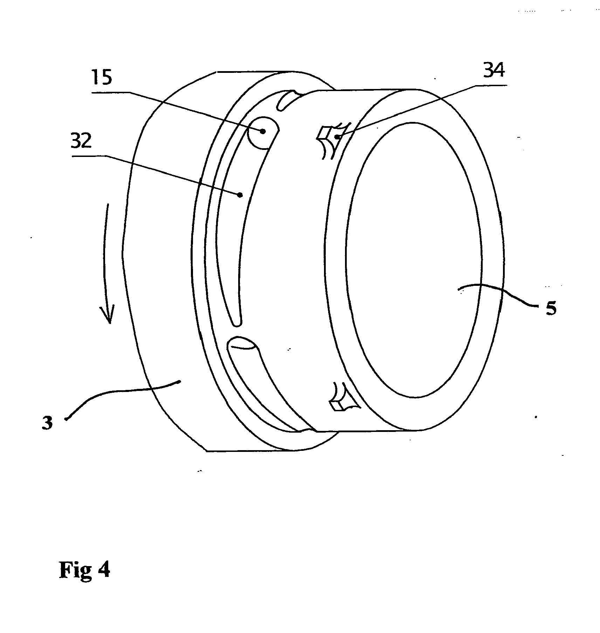

Referring to Figures 1 to 4, a coaxial multi-shaft assembly 1 comprises a casing 2, a hollow outer shaft 3 that is freely rotatable in a bore defined by the casing and an inner shaft 4 that is freely rotatable in a bore 5 defined by the outer shaft. The casing 2, outer shaft 3 and inner shaft 4 are arranged so as to be coaxial (see axis A in Figure 1). The inner shaft 4 is rotatable independently of the outer shaft 3. An outer shaft seal arrangement is provided between the casing 2 and the outer shaft 3. An inner shaft seal arrangement is provided between the outer shaft 3 and inner shaft 4.

A spring seat 6 of the outer shaft seal arrangement is supported on the casing 2. The spring seat 6 and the springs 7 it supports do not rotate when the outer shaft 3 rotates about the axis of rotation A. A spring seat 8 of the inner shaft seal arrangement is supported on the inner shaft 4 and, together with the spring 9 it supports, rotates with the inner shaft 4 when the inner shaft is rotated.

An outer seal chamber 10, 11 is defined between a radially inwardly facing surface of the casing 2 and a recess provided in the radially outwardly facing surface of the outer shaft 3. The spring seat 6 of the outer shaft seal arrangement divides the outer seal chamber into two parts 10, 11. The radial gap between the spring seat 6 and the facing surface portion of the outer shaft 3 is small such that there is substantially no fluid flow between the two parts 10, 11. The upstream part 10 of the outer seal chamber is a feed chamber, which receives coolant from an external source via a feed inlet 12, which is a radially extending bore provided in the casing 2. The downstream part of the outer seal chamber is a discharge chamber 11 from which coolant is discharged from the assembly 1 via a discharge outlet 13 defined by the casing 2. The discharge outlet 13 is a radially extending bore provided in the casing 2.

An inner seal chamber 14 is defined between a recess provided in a radially inwardly facing surface of the outer shaft 3 and a radially outwardly facing surface of the inner shaft 4. The inner seal chamber 14 is disposed generally opposite the outer seal chamber 10, 11. The inner shaft seal is provided in the inner seal chamber 14.

The outer shaft 3 is provided with a plurality of feed holes 15 and discharge holes 16 that extend between the feed chamber 10 and the inner seal chamber 14 and the inner seal chamber and discharge chamber 11 respectively. Coolant from an external source runs into the feed chamber 10 via the feed inlet 12 where it serves to cool the parts of the outer shaft seal arrangement that are housed in the feed chamber. From the feed chamber 10, the coolant runs into the inner seal chamber 14 via the feed hole 15 where it cools the parts of the inner shaft seal arrangement. The coolant then flows into the discharge chamber 12 via the discharge hole 16, where it cools the parts of the outer shaft seal arrangement that are housed in the discharge chamber, before flowing out of the assembly 1 via the discharge outlet 13. There is thus defined a coolant flow path extending between the feed inlet 12 and the discharge outlet 13.

Referring to Figures 2 and 3, it can be seen that the feed holes 15 and discharge holes 16 are non-radial passages that each extend parallel to and are spaced apart from a diameter of the outer shaft 3. The feed holes 15 and discharge holes 16 are out of phase. Although other arrangements are possible, in this embodiment, the feed holes 15 are 90° out of phase with the discharge holes 16. Although not essential, in this embodiment, the feed holes 15 and the discharge holes 16 are each tangent to the bore 5.

The outer shaft seal arrangement comprises active rings 16, 19 and respective static rings 20, 21 that are pressed against the active rings by respective springs 7. Respective O-rings 22, 23 seal between the static rings 20, 21 and the casing 2.

The spring seat 8 and spring 9 of the inner shaft seal arrangement rotate with the inner shaft 4 when it rotates. The inner shaft seal arrangement comprises active rings 24, 25, 27, 28. The active rings 24, 25 rotate with the spring 9 when the inner shaft 4 rotates. The active rings 27, 28 are carried by the outer shaft 3 and rotate with that shaft when it rotates. The active rings 24, 25 are pressed against the respective active rings 27, 28 by the spring 9. Respective O-rings 29, 30 seal between the active rings 24, 25 and the inner shaft 4.

When the outer shaft 3 rotates, centrifugal force acts on the coolant in the way the blade of a centrifugal pump functions. As a result, coolant in the feed holes 15 may be thrown outwards creating a vacuum in the inner seal chamber 14 and a failure of the coolant feed. This problem can be solved by increasing the pressure at which the coolant is pumped from the external source. However, extra pressure acting on the shaft seals will reduce the life of seals. In order to prevent coolant being thrown from the feed holes 15, the feed holes slant in the direction of rotation, while the discharge holes 16 slant against the direction of rotation (this can be seen by comparing Figures 2 and 3). Additionally, respective concave flutes 32 may be provided near the feed holes on the outer shaft, in the direction of rotation, to achieve easy intake in the feed holes and easy discharge from the discharge hole.

In the embodiment, the diameter of the discharge holes 16 is greater than that of feed holes 15. As a result, the larger centrifugal force acting at the discharge holes, in contrast with the smaller centrifugal force at the feed holes, makes the coolant flow in the required direction even when very low feed pressures are encountered.

In some embodiments, the distance between feed holes and the parts of the outer shaft sealing arrangement in the feed chamber 10 may be such that the coolant does not reach the rubbing faces of shaft seal parts 16, 20. Formations in the form of a plurality of circumferentially spaced protrusions 34 are provided on the radially outwardly facing surface of the outer shaft adjacent the feed holes 15. When the outer shaft 3 is rotating, the protrusions 24 throw coolant generally radially outwardly in the general direction of the rubbing faces of the seal parts 16, 20. It will be appreciated that the formations may take many forms and are not limited to protrusions 34 as shown in the drawings. For example, a spiraling or thread-like structure could be used.

It will be appreciated that a coaxial multi-shaft assembly having more than two shafts can readily be obtained by simply adding further shafts and shaft seal arrangements.

## Claims

1. A coaxial multi-shaft assembly (1) comprising a casing (2), a hollow outer shaft (3) that is freely rotatable in the casing, an inner shaft (4) that is freely rotatable in the outer shaft (3) and independently of the outer shaft, an outer shaft seal arrangement (16, 19, 20, 21) sealing between the casing and the outer shaft and an inner shaft seal arrangement (24, 25, 27, 28) sealing between the outer shaft and the inner shaft, the outer shaft seal arrangement including a spring seat (6) supported by the casing (2) such that it does not rotate when, in use, the outer shaft rotates, the inner shaft seal arrangement comprising a spring seat (8) that is supported by the inner shaft such that it is rotatable with the inner shaft, the spring seat (6) of the outer shaft seal arrangement being arranged to divide an outer seal chamber defined between the outer shaft and the casing into two parts (10, 11), a first of the two parts being a feed chamber (10) arranged to receive coolant via a feed inlet (12) and a second of the two parts being a discharge chamber (11) from which, in use, coolant is discharged from the assembly (1) via a discharge outlet (13), an inner seal chamber (14) being defined between the inner shaft and the outer shaft, a feed hole (15) and discharge hole (16) extending between the feed chamber (10) and the inner seal chamber and between the discharge chamber (11) and the inner seal chamber respectively and the arrangement being such that coolant from an external source can flow into the feed chamber (10) via the feed inlet (12), from the feed chamber into the inner seal chamber (14) via the feed hole (15), from the inner seal chamber into the discharge chamber (11) via the discharge hole (16) and from the discharge chamber via the discharge outlet (13).

2. An assembly according to claim 1, wherein the feed hole (15) slants in the direction of rotation of the outer shaft, while the discharge hole (16) slants against the direction of rotation.

3. An assembly according to claim 1 or 2, wherein a concave flute (32) extends from adjacent the feed hole (15) in the direction of rotation.

4. An assembly according to claim 1, 2 or 3, wherein the diameter of the discharge hole (16) is greater than that of feed hole (15).

5. An assembly according to any one of the preceding claims, wherein at least one protrusion (34) is provided on the outer shaft (3) adjacent the feed hole (15) for causing coolant to be thrown towards rubbing portions of the outer seal arrangement.

6. A coaxial multi-shaft assembly (1) comprising casing means (2), an outer shaft (3) at least partially housed in the casing means and rotatable relative to the casing means, an inner shaft (4) at least partially housed in the outer shaft and rotatable relative to the outer shaft, outer seal means (16, 19, 20, 21) for sealing between the casing means and the outer shaft and inner seal means (24, 25, 27, 28) for sealing between the outer shaft and the inner shaft, the assembly being provided with a coolant flowpath that includes outer seal housing means (10, 11) in which said outer seal means is at least partially housed and inner seal housing means (14) in which said inner seal means is at least partially housed and the arrangement being such that, in use, coolant flowing along said flowpath cools said inner and outer seal means.

7. An assembly according to claim 6, in which said outer seal housing means is divided into at least two substantially separate portions (10, 11) and said flowpath is arranged such that the coolant flow between an upstream said portion (10) and a downstream said portion (11) via said inner seal housing means (14).

8. An assembly according to claim 6 or 7, wherein said flowpath includes at least one non radial feed passage (15) provided in said outer shaft (3) connecting a said upstream portion (10) and the inner seal housing means (14) and

9. An assembly according to claim 8, wherein said flowpath includes at least one non-radial discharge passage (16) provided in said outer shaft (3) connecting the inner seal housing means (14) and a said downstream portion (11), the or each said discharge passage being out of phase with the or each said feed passage.

10. An assembly according to any one of claims 6 to 9, wherein said outer shaft comprises formations on a radially outwardly facing surface thereof for causing coolant to be thrown outwardly of the outer shaft towards said outer seal means.
